# FASCICULE DE BREVET EUROPEEN

(11) **EP 0 890 753 B1**
(45) Date de publication et mention de la délivrance du brevet: **09.06.2010**
(21) Numéro de dépôt: 98402515.5
(22) Date de dépôt: 17.12.1993
(51) Int. Cl.: F16C 41/00, F16C 33/78, G01P 3/44

(54) **Roulement comportant un joint d'étanchéité à codeur incorporé**
Wälzlager mit einer Dichtung mit integriertem Signalgeber
Rolling bearing comprising a seal with integrated encoder

(30) Priorité: 19.01.1993 FR 9300458
(43) Date de publication de la demande: 13.01.1999
(62) Demande divisionnaire de: 93403068.5
(73) Titulaire: S.N.R. ROULEMENTS, F-74010 Annecy Cedex (FR)
(72) Inventeur: Hajzler, Christian, 74330 Poisy (FR)
(74) Mandataire: Novagraaf Technologies

(56) Documents cités:
- EP-A- 0 371 836
- EP-A- 0 378 939
- EP-A- 0 495 323
- DE-A- 3 735 070
- DE-A- 3 809 904
- FR-A- 2 574 501
- US-A- 5 042 822
- PATENT ABSTRACTS OF JAPAN vol. 013, no. 194 (M-823), 10 mai 1989 (1989-05-10) & JP 01 021219 A (NIPPON SEIKO KK), 24 janvier 1989 (1989-01-24)

## Description

L'invention concerne un joint d'étanchéité à codeur incorporé dans lequel un disque tournant porte ledit codeur à aimantation multipolaire pour générer un champ magnétique apte à se déplacer devant un capteur fixe.

La publication EP-A-495323 décrit un joint d'étanchéité qui possède un déflecteur tournant recouvert ou réalisé en un matériau aimanté.

Lorsque le fonctionnement du capteur nécessite un champ magnétique important, l'encombrement axial du codeur doit être augmenté. Selon la publication FR-A-2 660 975 la face intérieure du disque tournant est orientée vers la garniture d'étanchéité, tandis que la face extérieure du disque porte le codeur. La dimension axiale globale d'un tel joint ne permet plus la réalisation de roulements ou de paliers étanches dont l'encombrement axial est déterminé à l'avance.

La figure 4 du document EP-A-495 323 représente un roulement à capteur d'informations ayant une bague fixe et une bague tournante. Sur la bague fixe est montée une armature fixe et sur la bague mobile est montée une armature mobile. Les deux armatures délimitent axialement entre elles une chambre annulaire. L'armature mobile comporte un disque et, solidaire, une portée cylindrique destinée à être emmanchée sur la bague tournante. Dans cette réalisation, le capteur d'informations est intégré au roulement.

Le document FR-A-2574501 concerne également un roulement à capteur d'informations intégré. Il est prévu, s'agissant du codeur, qu'il peut être formé à partir d'une feuille d'acier à faible teneur en carbone ferro-magnétique revêtue d'une couche mince de ferrite et de liant polymérisé.

La figure 2 du document EP 371 836 A montre roulement selon le préambule de la revendication 1 dans lequel un codeur est intégré à un joint d'étanchéité monté avec une portée cylindrique emmanchée sur une bague extérieure tournante d'un roulement. Le joint d'étanchéité porte deux lèvres en contact avec une deuxième armature portant un capteur et emmanchée sur une bague intérieure fixe. Le codeur se trouve dans la région des face latérales des bagues du roulement et est réalisé dans la matière de la garniture d'étanchéité localement chargée de matière magnétisable.

L'invention a pour objet un roulement et un palier étanche dans lequel la position axiale du joint d'étanchéité demeure sans effet sur la dimension globale dudit roulement ou palier.

L'invention a également pour objet un roulement et un palier dont l'étanchéité est améliorée au niveau des liaisons du joint avec les éléments fixe et mobile dudit roulement ou palier.

L'invention a encore pour objet un joint d'étanchéité compact comportant une garniture d'étanchéité à lèvres souples, dont le codeur peut être aisément fabriqué à partir d'un élastomère chargé de particules de ferrite.

Selon l'invention , il est proposé un roulement comportant un dispositif de joint d'étanchéité à codeur incorporé selon la revendication 1.

Le joint d'étanchéité ainsi réalisé possède l'avantage de pouvoir être monté de façon étanche dans un roulement sans précautions particulières.

Le codeur incorporé au joint possèdera cependant un volume suffisant pour que le champ magnétique puisse être aisément lu par un capteur.

D'autres caractéristiques et avantage de l'invention apparaîtront à la lecture de la description d'exemples de réalisations des montages du joint en référence au dessin annexé dans lequel :
- la figure 1 est une vue en coupe radiale d'un ensemble préassemblé formant joint d'étanchéité à codeur incorporé monté entre un arbre tournant et un carter fixe ;
- la figure 2 représente une variante de réalisation du montage représenté à la figure 1 ;
- la figure 3 est une vue en coupe radiale d'un ensemble préassemblé formant joint d'étanchéité à codeur incorporé monté avec une nervure d'encastrement de l'ensemble entre deux bagues extérieure et intérieure d'un roulement selon une variante des figures 1 et 2 ;
- la figue 4 représente une première variante de réalisation de la figure 3 ;
- la figure 5 représente une deuxième variante de réalisation de la figure 3 ;
- la figure 6 représente un roulement avec une version simplifiée du joint d'étanchéité à codeur selon l'invention;
- la figure 7 représente une variante de réalisation du joint représenté à la figure 6.

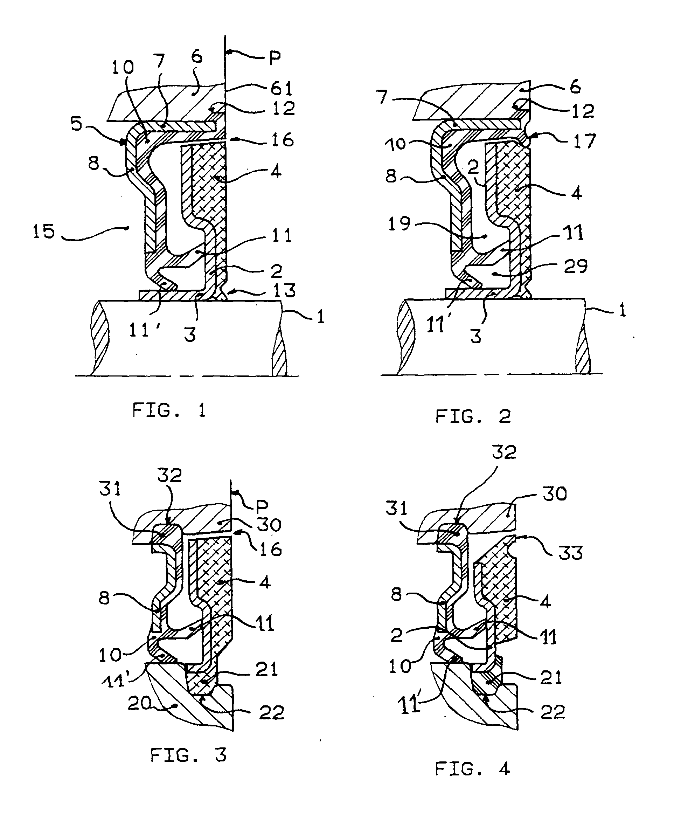

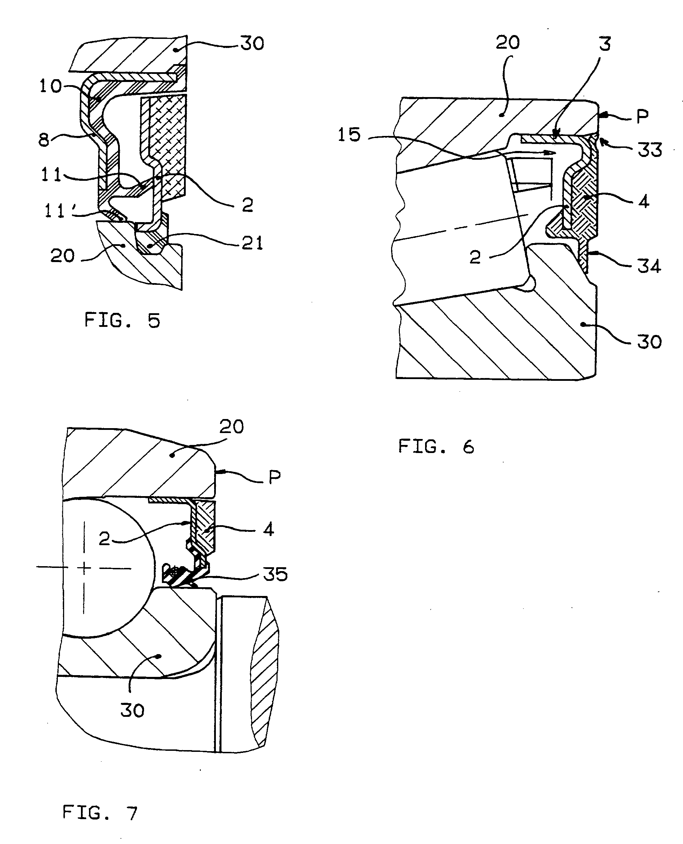

Les figures 1 à 5 sont décrites en vue de la compréhension des figures 6 et 7 qui représentent deux variantes du roulement selon l'invention.

Ainsi que cela est montré à la figure 1 et 2 un arbre support tournant 1 porte un disque radial 2 solidaire d'une portée cylindrique 3 emmanchée sur l'arbre 1. Une face du disque 2 est recouverte par un élastomère chargé de particules magnétiques qui constitue l'élément codeur 4.

Le disque 2 et sa portée cylindrique 3 constituent conjointement une armature intérieure localisée dans une armature extérieure fixe 5 montée sur un support 6. L'armature extérieure fixe 5 possède également une portée de montage 7 encastrée dans le support 6 et un disque radial fixe 8 orienté vers l'axe de rotation de l'arbre 1.

Le disque 8 porte un revêtement élastomère 10 d'étanchéité surmoulé qui possède ici une lèvre axiale 11 et une lèvre radiale 11' respectivement en appui sur la face libre du disque 2 et sur la surface extérieure de la portée 3. La limite du revêtement 10 raccordée à la porte de montage 7 possède une nervure circulaire 12 encastrée dans un lamage ou sur un chanfrein du support 6.

La surface latérale extérieure de l'élément codeur 4 est raccordée à une lèvre radiale d'étanchéité 13 fixée au disque 2 et en appui sur l'arbre 1 et est sensiblement confondue avec le plan p de la face latérale 61 du support 6.

L'ensemble des disques 2, 8 munis de leurs revêtements 4, 10 est monté dans une cavité annulaire 15 axialement limitée par le plan p.

Selon une caractéristique du montage représenté à la figure 1, la surface périphérique de l'ensemble constitué par le disque 2 et par l'élément codeur 4 est radialement séparée du revêtement élastomère 10 par un interstice 16.

Par ailleurs, la surface périphérique de l'ensemble disque 2-codeur 4 peut être encastrée sous une lèvre d'étanchéité 17 fixe portée par le revêtement 10 et au contact de l'élément codeur tournant 4 ainsi que cela est représenté à la figure 2.

Par ailleurs, les disques 2, 8 délimitent des cavités annulaires 19, 29 remplies d'un liquide magnétique maintenu en place par le magnétisme de l'élément codeur 4. Ce liquide peut également être contenu dans l'interstice 16. La présence de ferrite améliore de la sorte l'étanchéité du joint.

Le disque 2 peut également être réalisé en matériau magnétique dans le but d'assurer une concentration du champ et du flux magnétique émis par l'élément codeur 4.

Les figures 3 et 4 représentent une variante de montage de l'ensemble joint d'étanchéité/codeur représenté aux figures 1 et 2. Les éléments et organes du montage représentés aux figures 3 et 4 dont la fonction est en correspondance avec les éléments et organes représentés aux figures 1 et 2 portent de ce fait les mêmes indices.

Le joint d'étanchéité représenté est monté dans une cavité délimitée entre les bagues support, intérieure tournante 20 et extérieure fixe 30 d'un roulement à éléments roulants. A cet effet l'élément codeur 4 du disque 2 est limité radialement sur son diamètre intérieur par une nervure d'étanchéité annulaire 21 destinée au montage de l'élément codeur 4 dans une gorge annulaire 22 de la bague intérieure 20. D'une manière analogue, le revêtement élastomère 10 du disque 8 est limité radialement sur son diamètre extérieur par une nervure d'étanchéité annulaire 31 destinée au montage du disque 8 dans une gorge annulaire 32 de la bague extérieure 30.

On désignera ci-après plus généralement par la référence 20, le support tournant de l'élément codeur 4 et par la référence 30, le support éventuel d'un élément fixe du joint d'étanchéité.

Dans les montages précités la face latérale extérieure du codeur 4 est sensiblement confondue avec le plan p de la face latérale de la bague 30 support du disque 8.

Selon la figure 3, la surface périphérique de l'ensemble disque codeur 2, 4 est limitée radialement par un intervalle 16 de séparation avec la bague extérieure 30 du roulement.

Selon la figure 4, la dimension axiale de l'interstice 16 est limité par une lèvre 33 qui prolonge radialement vers l'extérieur la matière constitutive du codeur 4.

Par ailleurs, la nervure d'étanchéité annulaire 21 est constituée par un élastomère non chargé de ferrite.

La figure 5 décrit un joint d'étanchéité à codeur incorporé dans lequel le disque 2 porteur du codeur correspond à la structure décrite en référence à la figure 3 et dans laquelle la nervure d'étanchéité annulaire 21 est constituée par un élastomère non chargé de ferrite.

Dans le montage précité le disque 8 porteur du revêtement élastomère 10 à lèvres d'étanchéité 11, 11' correspond à la structure décrite en référence à la figure 1 et dans laquelle la lèvre radiale 11' est en appui par exemple sur la bague 20 tournante intérieure d'un roulement.

La figure 6 décrit un montage simplifiée à joint d'étanchéité à codeur sur les bagues 30 fixe intérieure et 20 tournante extérieure du roulement.

Le disque 2 se prolonge extérieurement par une portée cylindrique de montage 3 dans la cavité 15 délimitée entre les bagues 20, 30 et le plan p de la face latérale du roulement.

L'élément codeur 4 porte :
- une lèvre d'étanchéité radiale extérieure 33 en contact avec l'alésage de la bague tournante ;
- une lèvre axi-radiale 34 en contact avec une portée conique de la bague fixe 30.

La figure 7 décrit un autre montage simplifié à joint d'étanchéité à codeur monté entre les bagues 30 fixe intérieure et 20 tournante extérieure d'un roulement. Dans cet exemple une face latérale de l'élément codeur 4 est sensiblement confondu avec le plan p de la face latérale du roulement.

Le disque 2 porte un joint élastomère connu en col à double étanchéité équipé de deux lèvres radiales 35, en appui sur la bague 30 sous l'effet du ressort.

## Revendications

1. Roulement comportant :
- une bague fixe (30),
- une bague mobile (20),
- un dispositif de joint d'étanchéité à codeur incorporé monté entre la bague fixe (30) et la bague mobile (20), le dispositif de joint
- comportant :
- une armature mobile ayant un disque (2) et, solidaire, une portée cylindrique (3) emmanchée sur la bague mobile (20) ;
- un élément codeur magnétique (4) supporté par le disque (2) et formé par un élastomère chargé de particules magnétiques recouvrant la face extérieure du disque (2), la face extérieure de l'élément codeur magnétique (4) étant sensiblement contenue dans le plan P d'une face latérale du roulement, l'élément codeur possédant un volume suffisant pour que le champ magnétique puisse être aisément lu par un capteur; et
- un joint d'étanchéité (34, 35) en élastomère porté par le disque (2) ;
**caractérisé en ce que** le joint d'étanchéité (34, 35) est en appui sur la bague fixe (30), le dispositif de joint étant dépourvu d'armature fixe solidaire de la bague fixe (30), du type de celle supportant un moyen d'étanchéité fixe.

2. Roulement selon la revendication 1, **caractérisé en ce que** le joint d'étanchéité porté par le disque (2) est équipé de deux lèvres radiales.

3. Roulement selon la revendication 2, **caractérisé en ce que** le joint d'étanchéité équipé de deux lèvres est en appui sur la bague fixe (30) au moyen d'un ressort.

4. Roulement selon la revendication 2 ou la revendication 3, **caractérisé en ce que** le joint d'étanchéité est distinct de l'élément codeur (4).

5. Roulement selon l'une quelconque des revendications précédentes, **caractérisé en ce que** qu'il comporte en outre une lèvre radiale (33) qui prolonge radialement la matière constitutive de l'élément codeur et est en appui sur la bague mobile, axialement à l'extérieur de la portée cylindrique.

## Claims

1. A bearing including:
- a fixed ring (30);
- a movable ring (20);
- a sealing device with an integrated encoder mounted between the fixed ring (30) and the movable ring (20), with the sealing device including:
- a movable support having a disk (2), and an integral cylindrical seat (3) fitted on the movable ring (20);
- a magnetic encoding element (4) supported by the disk (2) and made of elastomer filled with magnetic particles covering the external face of the disk (2); the external face of the magnetic encoding element (4) being substantially contained within the plane P of a lateral face of the bearing, with the encoding element having a sufficient volume for the magnetic field to be easily read by a sensor; and
- a gasket (34, 35) made of elastomer supported by the disk (2);
**characterised in that** the gasket (34, 35) rests on the fixed ring (30), with the sealing device having no fixed basis integral with the fixed ring (30), of the type supporting fixed sealing means.

2. A bearing according to claim 1, **characterised in that** the gasket supported by the disk (2) is fitted with two radial lips.

3. A bearing according to claim 2, **characterised in that** the gasket fitted with two lips rests on the fixed ring (30) thanks to a spring.

4. A bearing according to claim 2 or claim 3, **characterised in that** the gasket is distinct from the encoding element (4).

5. A bearing according to any one of the preceding claims, **characterised in that** it further includes a radial lip (33) which radially extends the material constituting the encoding element and axially rests on the movable ring, outside the cylindrical seat.

## Patentansprüche

1. Wälzlager mit folgenden Teilen :
- ein feststehender Ring (30),
- ein mobiler Ring (20),
- eine Dichtungsvorrichtung mit integriertem Codierer, die zwischen dem feststehenden Ring (30) und dem mobilen Ring (20) montiert ist, wobei die Dichtungsvorrichtung folgende Teile umfaßt:
- eine mobiles Gestell mit einer Scheibe (2) und fest damit verbunden eine zylinderförmige Tragfläche (3), die auf den mobilen Ring (20) aufgesteckt ist;
- ein magnetisches Codierelement (4), das von der Scheibe (2) getragen und von einem mit magnetischen Partikeln beladenen Elastomer geformt wird, das die Außenseite der Scheibe (2) abdeckt, wobei die Außenseite des magnetischen Codierelements (4) im wesentlichen in der Ebene P einer Seitenfläche des Wälzlagers enthalten ist, wobei das Codierlement ein ausreichendes Volumen besitzt, damit das Magnetfeld von einem Sensor leicht abgelesen werden kann;
- eine Dichtung (34, 35) aus Elastomer, die von der Scheibe (2) getragen wird;
**Dadurch gekennzeichnet, daß** die Dichtung (34, 35) auf dem feststehenden Ring (30) aufliegt, wobei die Dichtungsvorrichtung kein fest mit dem feststehenden Ring (30) verbundenes festes Gestell hat, von der Art, die ein feststehendes Dichtungssmittel trägt.

2. Wälzlager nach Anspruch 1, **dadurch gekennzeichnet, daß** die von der Scheibe (2) getragene Dichtung mit zwei radialen Lippen ausgerüstet ist.

3. Wälzlager nach Anspruch 2, **dadurch gekennzeichnet, daß** die mit zwei Lippen ausgerüstete Dichtung vermittels einer Feder auf dem feststehenden Ring (30) aufliegt.

4. Wälzlager nach Anspruch 2 oder Anspruch 3, **dadurch gekennzeichnet, daß** die Dichtung getrennt vom Element des magnetischen Codierers (4) ist.

5. Wälzlager nach einem beliebigen der vorstehenden Ansprüche, **dadurch gekennzeichnet, daß** es ferner eine radiale Lippe (33) umfaßt, die das Bestandsmaterial des Elements des Codierers radial verlängert und axial außerhalb der zylinderförmigen Tragfläche auf dem mobilen Ring aufliegt.
